# EUROPEAN PATENT SPECIFICATION

(11) **EP 2 201 629 B1**
(45) Date of publication and mention of the grant of the patent: **12.02.2014**
(21) Application number: 08832448.8
(22) Date of filing: 16.09.2008
(51) Int. Cl.: H01M 2/20, H01M 2/30, H01M 10/04

(54) **MODULE PACK FOR SECONDARY BATTERY**
MODULPACK FÜR EINE SEKUNDÄRBATTERIE
PACK DE MODULES POUR BATTERIE SECONDAIRE

(30) Priority: 19.09.2007 KR 20070095554; 24.07.2008 KR 20080072276
(43) Date of publication of application: 30.06.2010
(73) Proprietor: SK Innovation Co., Ltd., Jongro-gu Seoul 110-110 (KR)
(72) Inventor: YUN, Jung Sik, Daejeon 305-712 (KR); OH, Jeon Keun, Yusung-Gu, Daejeon, 305-712 (KR); LEE, Eun Joo, Daejeon, 305-712 (KR)
(74) Representative: Heine, Christian Klaus
(86) International application number: PCT/KR2008/005448
(87) International publication number: WO 2009/038320

(56) References cited:
- WO-A1-2006/059434
- WO-A1-2011/057246
- WO-A1-2011/116804
- WO-A2-2007/121445
- WO-A2-2008/048751
- JP-A- 2000 003 702
- KR-A- 20040 035 411
- KR-A- 20070 080 871
- US-A1- 2007 154 802

## Description

### [Technical Field]

The present invention relates, in general, to a module pack for a secondary battery which connects a plurality of cell batteries in parallel or in series and, more particularly, to a module pack for a secondary battery which improves a connecting structure between cell batteries to not only maintain mutual stable connection but also promote easy assembly and disassembly.

### [Background Art]

In general, electrochemical cells are made up of a pair of electrodes, i.e. positive and negative electrodes, and an electrolyte, and vary in the quantity of storable energy depending on the material out of which the electrodes and the electrolyte are made. These electrochemical cells are classified into primary cells that are usable only for discharging due to a very slow charging reaction, and secondary cells that are reusable through repetitive performance of charging and discharging. A recent tendency shows that the secondary cells are used more and more often due to the advantage of repetitive charging and discharging.

In detail, the secondary cells are applied in various fields of technologies throughout the industry due to their advantages. For example, the secondary cells are not only widely used as energy sources of high-tech electronics such as wireless mobile appliances, but also draw attention as energy sources of hybrid electric vehicles, etc., which have been proposed as a solution for coping with air pollution caused by existing gasoline and diesel internal combustion engines which use fossil fuels.

A battery pack for such hybrid vehicles is e. g. known from WO 2008/048751.

In particular, lithium batteries have a working voltage of 3.6 V, which is three times as high as nickel-cadmium batteries or nickel-hydrogen batteries used as power supplies of electronic equipment, and have a tendency toward rapid expansion because of high energy density per unit weight. These lithium batteries mainly make use of lithium oxides as the active materials for the main positive electrode, and carbon materials as active materials of the negative electrode.

These lithium batteries are classified into liquid electrolytic batteries and polymer electrolytic batteries according to the kind of electrolyte. The liquid electrolytic batteries are called lithium ion batteries, and the polymer electrolytic batteries are called lithium polymer batteries, and have recently become the target of intense interest. The lithium polymer batteries are made of flexible materials, and thus are shaped in a relatively free manner. Further, the lithium polymer batteries have high stability and light weight, and thus have the advantage of reducing the thickness and weight of various electronic appliances.

Meanwhile, the lithium batteries are variously fabricated according to the shape of the case holding the electrode assembly. The representative shapes thereof include a cylinder shape, a prism shape, a pouch shape, and so on.

Typically, the cylinder lithium batteries use a cylindrical aluminum can, and the prism lithium batteries use a prismatic aluminum can. Further, the pouch lithium batteries are sealed within a pouch, which forms a thin film made of aluminum, i.e. an aluminum laminate film, into a pack, and thus are of relatively light weight and excellent stability, so that they have become widely used in recent years.

As described above, as the applied fields and products using the secondary cells are diversified, so too are the kinds of the secondary cells so that they are able to provide the power and capacity suitable for the fields and products.

Specifically, the portability of small electronic appliances such as mobile communication terminals (personal communication services (PCS), cellular phones, CDMA2000 terminals, etc.), personal digital assistants (PDA), laptop computers, etc. is regarded as important. As such, a module pack made up of one or more cell batterie having a size and capacity corresponding to each of them is used. Large electronic appliances such as electric scooters, hybrid electric vehicles, etc. make use of a high-capacity module pack, which a plurality of cell batteries are electrically connected to each other, due to a need for high power and capacity.

This module pack has an influence according to its size and weight on the occupied space and output of the electronic appliances to which it is applied, and thus preferably is as small and light as possible.

Particularly, when the large electronic appliances such as electric scooters or hybrid electric vehicles are in motion, lots of vibration and shock are transmitted from the surface of a road to a body of each electronic appliance, and thus the module pack mounted on each electronic appliance is required for high reliability in the face of vibration and shock.

The conventional module pack having high power and capacity is constructed so that a plurality of cell batteries is arranged in a case in the shape of a quadrilateral box, and so that tabs of the cell batteries are interconnected with each other in parallel or in series.

As for the construction of the pouch cell battery, a jelly roll obtained by stacking or winding positive and negative electrodes are stacked and wound into a jelly roll with a separator in between, and then the jelly roll is sealed with a pouch, i.e. an aluminum (Al) laminate film.

In detail, the pouch cell battery has a structure in which an electrode assembly (not shown) made up of the positive electrode, the separator and negative electrode is sealed along with electrolyte in a pouch-shaped pack made of an aluminum laminate film. An end of the pouch cell battery is formed as a planar electrode tab that extends from the electrode assembly to the outside.

However, the module pack constructed using the conventional pouch cell batteries constructed as mentioned above is inconvenient to physically interconnect the cell batteries in parallel or in series, and is low in reliability of the product due to low durability.

Specifically, in order to interconnect the electrode tabs of the cell batteries, part of each electrode tab is bent at a right angle, and then the bent part is welded with a plate, a bus bar, and so on. However, this method requires assembly skill, and provides inconvenience caused by use of a welding machine as well as low productivity and economic inefficiency as a result of the complicated process.

Further, in the case in which the module pack is mounted on an appliance such as an electric scooter or a hybrid electric vehicle to which considerable vibration and shock are transmitted from the outside, the connection between the cell batteries becomes poor due to the vibration and shock. As a result, this poor connection not only causes reduction in reliability of the module pack, but also is prone to cause a safety accident.

### [Disclosure]

### [Technical Problem]

Accordingly, the present invention has been made in an effort to solve the problems occurring in the related art, and embodiments of the present invention provide a module pack for a secondary battery; to guarantee firm and stable connection to increase reliability of a module pack.

### [Technical Solution]

In order to achieve the above object, according to a first embodiment of the present invention, there is provided a module pack for a secondary battery, which comprises a plurality of cell batteries, each of which has a pouch holding and sealing a rechargeable electrode assembly and planar battery tabs for negative and positive electrodes for inducing electric current from the electrode assembly to an outside, which are connected in parallel or in series, and which are housed in a case. Each battery tab includes a vertical plate part that is connected to the electrode assembly at a first end thereof and vertically extends at a second end thereof, a horizontal plate part that is bent at and horizontally extends from the second end of the vertical plate part at a right angle, and at least one fastening recess that is integrally formed in a leading end of the horizontal plate part and allows a fastening member to enter in a lateral direction.

The fastening member includes a tab support having a first threaded hole, a tab fixture having a second threaded hole at a position corresponding to the first threaded hole of the tab support, a bolt inserted upwardly into and fixed in the first threaded hole of the tab support, and a nut.

The module pack further comprises a partition interposed between a pair of neighboring cell batteries, formed of insulating material, and having a plurality of fastening protrusions protruding in a vertical upward direction.

The tab support includes upwardly bent segments vertically protruding upwardly from opposite ends thereof, and downwardly bent segments vertically protruding downwardly from opposite lateral edges thereof.

The upwardly bent segments include fastening holes, and the fastening protrusions of the partition are coupled with the fastening holes such that the tab support is fixed to the partition.

According to another embodiment of the present invention, either of one or more than one of the fastening recesses may be formed in each battery tab in a "V" shape at regular intervals.

According to another embodiment of the present invention, the battery tabs for negative and positive electrodes of each cell battery may have the horizontal plate parts disposed in opposite directions.

According to another embodiment of the present invention, the downwardly bent segments may be bent inwards in order to fixedly support the bolt inserted upwardly.

According to another embodiment of the present invention, the downwardly bent segments neighboring the bolt in order to fixedly support the bolt inserted upwardly may be bent to form V grooves.

According to another embodiment of the present invention, the bolt may include a polygonal head having at least one caulking groove for holding the downwardly bent segments bent inwards.

### [Advantageous Effects]

According to embodiments of the present invention, the module pack for a secondary battery can not only significantly improve parallel or serial connections between the cell batteries through a simple structural change in such a manner that the fastening recess is formed in the horizontal plate part bending the planar battery tab for the negative or positive electrode protruding from a body of each cell battery, but also guarantee firm and stable connection to increase reliability of a product.

Further, the body of the bolt is fastened with the nut after passing through the fastening recess, so that the connection between the cell batteries can be easily made by a simple bolt and nut connection.

Also, in the case in which a plurality of connection parts are required, the cell batteries are connected using the tab support from which a plurality of bolt bodies protrude and using a plurality of tab fixtures having threaded holes through which the bolt bodies pass, so that fastening work can be made easy.

Furthermore, the cell batteries are connected with the tab support coupled to the partition, so that a firmer and more stable connection can be ensured.

In addition, the head of the bolt is formed in a polygonal shape so as to prevent rotation of the bolt, and is provided with at least one caulking groove such that the downwardly bent segments are inserted into the caulking groove, so that the bolt can be stably supported on the tab support.

### [Description of Drawings]

FIG. 1 is a perspective view illustrating a cell battery constituting a module pack for a secondary battery;
FIG. 2 is a perspective view explaining a connection structure between cell batteries constituting a module pack for a secondary battery using first tab fastening members according to a first embodiment;
FIG. 3 is a schematic side view explaining an internal construction of the module pack for a secondary battery illustrated in FIG. 2;
FIG. 4 is a perspective view explaining a connection structure between cell batteries constituting a module pack for a secondary battery using second tab fastening members according to a second embodiment;
FIG. 5 is a schematic side view explaining an internal construction of the module pack for a secondary battery illustrated in FIG. 4;
FIG. 6 is a perspective view explaining a connection structure between cell batteries constituting a module pack for a secondary battery using third tab fastening members according to an embodiment of the present invention;
FIGS. 7 and 8 are detailed views of the bolt of FIG. 6;
FIG. 9 is a perspective view explaining connection between a third tab fastening member and an isolating partition in the module pack for a secondary battery illustrated in FIG. 6;
FIG. 10 is a schematic side view explaining an internal construction of the module pack for a secondary battery illustrated in FIG. 6;
FIG. 11 is a perspective view explaining another connection between a third tab fastening member and a partition in the module pack for a secondary battery illustrated in FIG. 6; and
FIG. 12 is a schematic side view explaining an internal construction of the module pack for a secondary battery illustrated in FIG. 10.

### <Major Reference Numerals and Symbols of the Drawings>

| | | | |
|---|---|---|---|
| 1: | module pack | 10: | cell battery |
| 10a: | pouch | 11: | battery tab |
| 11a: | vertical plate part | 11b: | horizontal plate part |
| 13: | fastening recess | | |
| 20a, 20b, 20c: | tab fastening member | | |
| 21a, 22c: | bolt | 23a, 23b, 23c: | nut |
| 22b, 23a: | tab support | 24b, 24c: | tab fixture |
| 30, 40: | partition | | |

### [Mode for Invention]

Additional advantages, objects, and features of the invention will become apparent to those having ordinary skill from the following detailed description and exemplary embodiments in conjunction with the accompanying drawings. Throughout the drawings, it is noted that the same reference numerals or letters will be used to designate like or equivalent elements having the same function. Further, the detailed descriptions of known function and construction unnecessarily obscuring the subject matter of the present invention will be avoided hereinafter.

Hereinafter, a module pack for a secondary battery according to an exemplary embodiment of prior art and later an embodiment of the present invention will be described in detail with reference to the accompanying drawings.

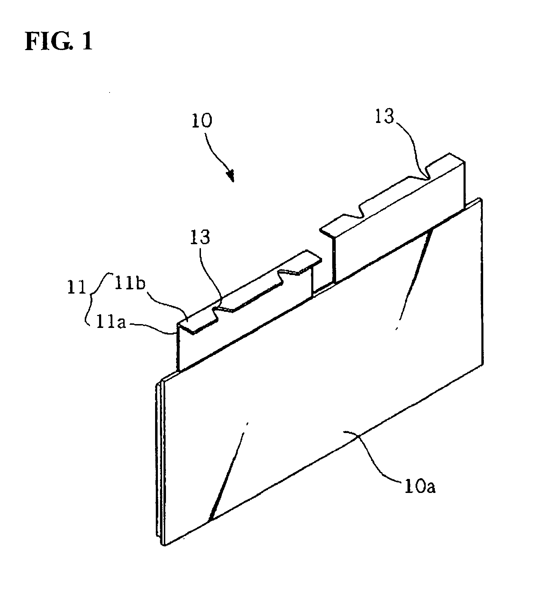

FIG. 1 is a perspective view illustrating a cell battery constituting a module pack for a secondary battery according to an exemplary embodiment.

Referring to FIG. 1, in an exemplary embodiment, a cell battery 10 is made up of a rechargeable electrode assembly (not shown), which includes a positive electrode plate having a positive electrode collector coated with a positive electrode active material layer, a negative electrode plate having a negative electrode collector coated with a negative electrode active material layer, and a separator inserted between the positive and negative electrode plates.

The electrode assembly is formed by stacking or winding the positive electrode plate, the separator, and the negative electrode plate in that order, and is held and sealed in a pouch 10a made of an aluminum laminate thin film.

Meanwhile, the positive and negative electrode plates constituting the electrode assembly is constructed to be coupled with respective battery tabs by welding. Here, the battery tabs for positive and negative electrodes are plate-like members, first ends of which are exposed to the outside so as to be able to induce electric current to an exterior of the electrode assembly. Typically, the battery tab for the positive electrode uses aluminum metal, and the battery tab for the negative electrode uses copper metal.

The cell battery 10 constructed in this way is substantially identical to the related art.

However, this embodiment is characterized in that the battery tabs 11 of each cell battery 10 constituting the module pack 1 for a secondary battery are structurally improved to maintain firm parallel or serial connections between the numerous cell batteries 10 and to guarantee good assemblability.

In detail, the battery tab 11 for positive or negative electrodes of each cell battery 10 generally includes a vertical plate part 11 a that is connected to the electrode assembly held in the pouch 10a at one end thereof and vertically extends so as to be exposed to the outside at the other end thereof, a horizontal plate part 11b that is bent at and horizontally extends from the other end of the vertical plate part 11a at a right angle, and fastening recesses 13 that are integrally formed in a leading end of the horizontal plate part 11b.

Here, the cell battery 10 is preferably constructed so that the horizontal plate parts 11b of the battery tabs 11 for positive and negative electrodes are disposed in opposite directions.

Further, the fastening recesses 13 are for connecting each pair of cell batteries 10 disposed adjacent to each other using fastening members 20. Any shape will do for each fastening recess 13. However, it is proposed to form each fastening recess 13 in a "V" shape as illustrated in the figures. Further, the number of fastening recesses 13 is one or more in consideration of a size of each battery tab 11. In the latter case, two or more fastening recesses 23 can be disposed at proper positions at regular intervals.

At this time, in comparison with the battery tabs connected by boring a hole in the horizontal plate part 11b and then fastening a screw in the hole, the battery tabs connected by using the fastening recesses 13 having the "V" shape can be connected in a simpler and more reliable manner through the fastening members.

Meanwhile, each fastening recess 13 having the "V" shape is preferably rounded at corners thereof.

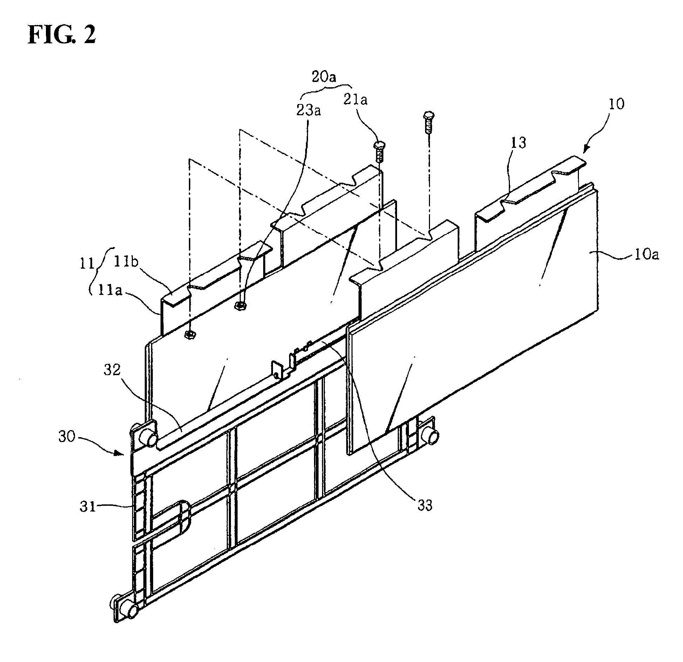

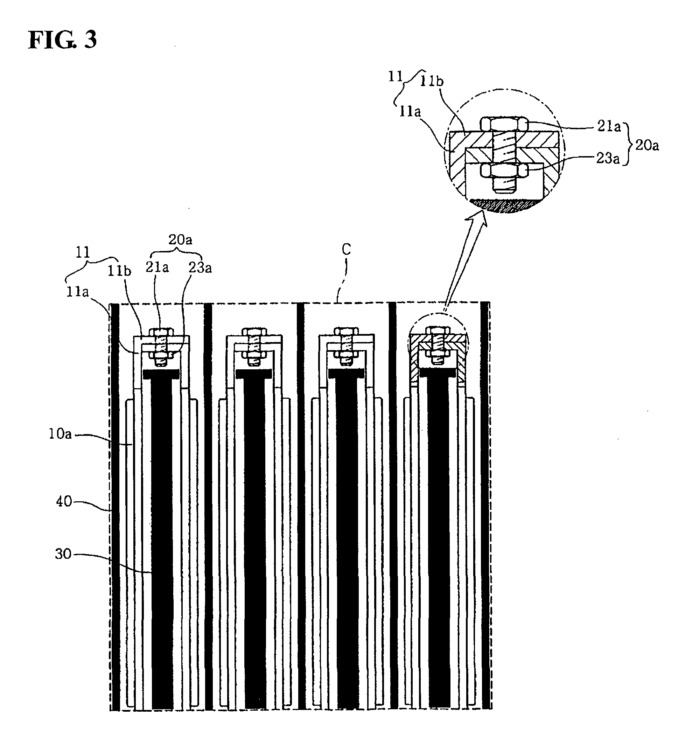

FIG. 2 is a perspective view explaining a connection structure between cell batteries constituting a module pack for a secondary battery using first tab fastening members according to a first embodiment. FIG. 3 is a schematic side view explaining an internal construction of the module pack for a secondary battery illustrated in FIG. 2.

This embodiment is characterized in that the cell batteries 10 are connected in parallel or in series with a partition 30 in between them connected using first tab fastening members 20a, each of which is made up of a bolt 21 a and a nut 23a.

Here, the partition 30 includes a body 31 interposed between the cell batteries 10 disposed back and forth in parallel, and a horizontal planar tab coupler 32 and a vertical planar tab isolator 33 formed on the left and right at an upper end of the body 31 which is formed of insulating material. The tab coupler 32 provides a space in which the bent horizontal plate parts 11b of the corresponding battery tabs 11 of the cell batteries 10 disposed back and forth in parallel are electrically connected above the tab coupler 32, and the tab isolator 33 serves to structurally prevent the corresponding battery tabs 11 of the cell batteries 10 disposed back and forth in parallel from coming into contact with each other.

According to this embodiment, the bolt 21a, which constitutes each of the first tab fastening members 20a, is inserted into the fastening recess 13 of the battery tab of the first cell battery 10 in a lateral direction, i.e. in a horizontal direction, and then the fastening recess of battery tab of the second cell battery 10 is brought towards the bolt 21 a until it overlaps with the fastening recess 13 of the battery tab of the first cell battery 10. In this state, the bolt 21a enclosed by the fastening recesses 13 of the battery tabs of the first and second cell batteries 10 are fastened with the nut 23a. Thereby, the battery tabs of the first and second cell batteries 10 are connected with each other. The cell batteries 10 connected in this way are disposed above the tab coupler 32 of the partition.

Meanwhile, referring to FIG. 3, the module pack 1 for a secondary battery according to a first embodiment is housed in a case C having a box shape after the battery tabs of the numerous cell batteries 10 are connected in parallel or in series.

Here, the numerous cell batteries 10 are vertically disposed in the case C serving as a body of the module pack 1 for a secondary battery. Further, each pair of neighboring cell batteries 10 is disposed so that the battery tabs 11 thereof overlap with each other. At this time, the bolts 21a fastened with the nuts 23a protrude through the fastening recesses 13 of the horizontal plate parts 116. A partition 40 is interposed between the neighboring pairs of cell batteries 10, and the partition 30 is interposed between the pair of neighboring cell batteries 10.

Meanwhile, as illustrated in FIGS. 2 and 3, each bolt 21a is fastened from bottom to top. This construction is merely illustrative.

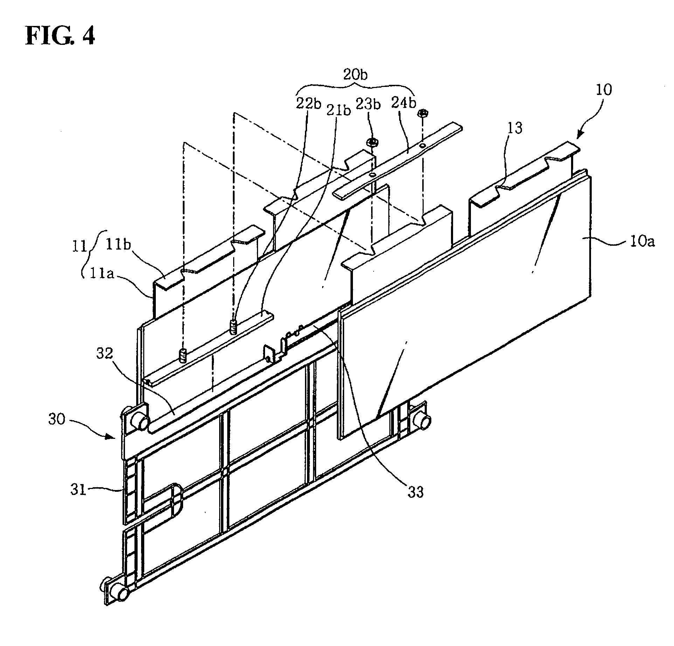

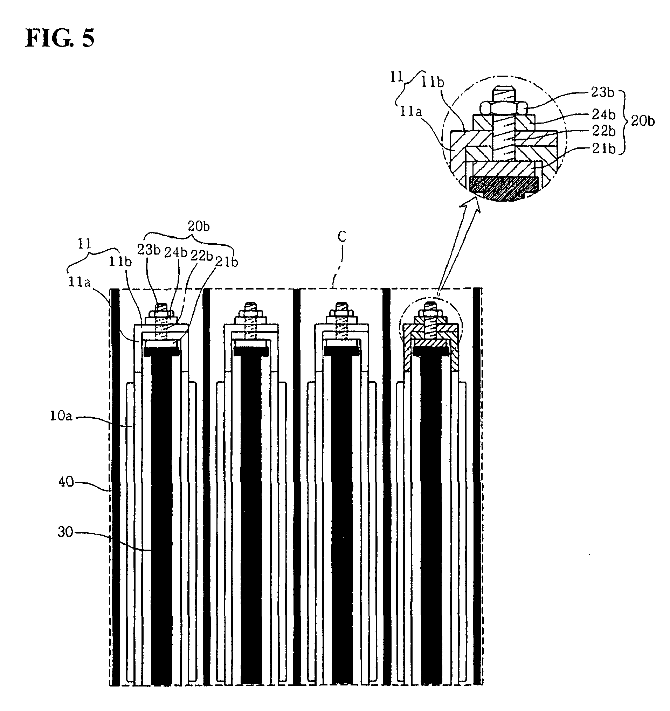

FIG. 4 is a perspective view explaining a connection structure between cell batteries constituting a module pack for a secondary battery using second tab fastening members according to a second embodiment. FIG. 5 is a schematic side view explaining an internal construction of the module pack for a secondary battery illustrated in FIG. 4. Here, the description repetitive with that of the first embodiment will be omitted.

This embodiment is characterized in that the cell batteries 10 are connected in parallel or in series using second tab fastening members 20b, each of which includes a tab support 21b, at least one bolt body 22b vertically protruding from the tab support 21b, a tab fixture 24b having a threaded hole at a position corresponding to the bolt body 22b, and a nut 23b fastened with the bolt body 22b.

According to this embodiment, the tab support 21b, from which at least one bolt body 22b vertically protrudes, enters towards the fastening recess 13 of the battery tab of the first cell battery in a lateral direction, i.e. in a horizontal direction, and then the fastening recess 13 of the battery tab of the second cell battery 10 is brought to the bolt body 22b until it overlaps with the fastening recess 13 of the battery tab of the first cell battery 10. Then, the tab fixture 24b is fitted around the protruding bolt body 22b. In this state, the bolt body 22b enclosed by the fastening recesses 13 of the battery tabs of the first and second cell batteries 10 are fastened with the nut 23b. Thereby, the battery tabs of the first and second cell batteries 10 are connected with each other. At this time, in order to further facilitate the fastening work, the tab support 21b is preferably disposed on the tab coupler 32 first Thereby, the cell batteries 10 are connected with each other.

In this embodiment, in the case in which a plurality of connection parts are required in order to maintain more stable connection in connecting the cell batteries, the tab support 21b from which a plurality of bolt bodies 22b protrude and a plurality of tab fixtures 24b having threaded holes through which the bolt bodies 22b pass are used to thereby improve fastening work as compared to the first embodiment in which the fastening work is carried out using individual bolts 21 a and nuts 23a.

Meanwhile, referring to FIG. 5, the module pack 1 for a secondary battery according to an embodiment is constructed so that the numerous cell batteries are vertically disposed in a case C serving as a body of the module pack 1 for a secondary battery. At this time, each pair of neighboring cell batteries 10 is connected in such a manner that the bolt body 22b protruding from the tab support 21b protrudes from bottom to top through the fastening recesses 13 of the horizontal plate parts 11b of the cell batteries and the threaded hole of the tab fixture 24b after the tab support 21b is disposed on the tab coupler 32, and is fastened with the nut 23b.

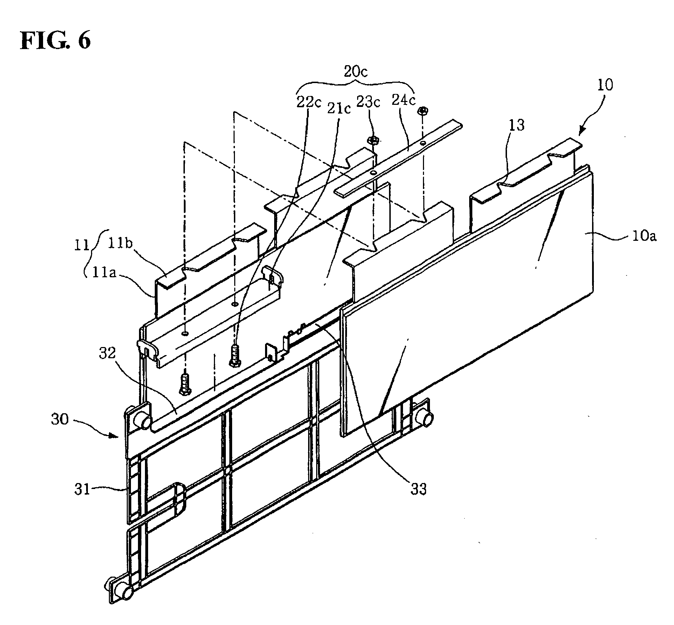

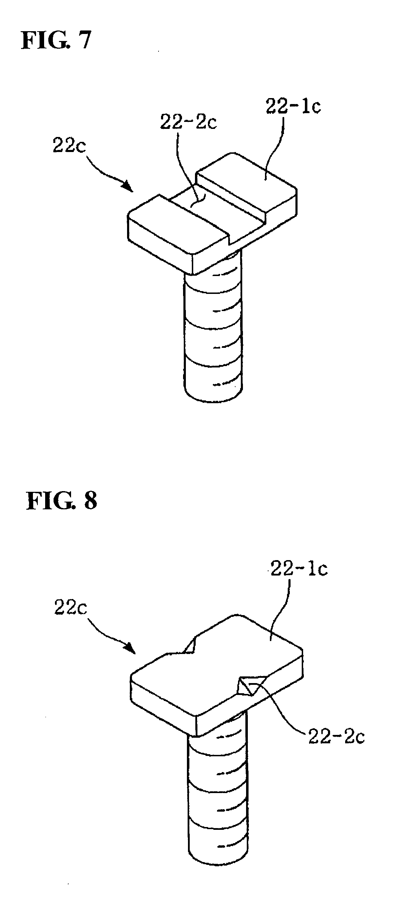

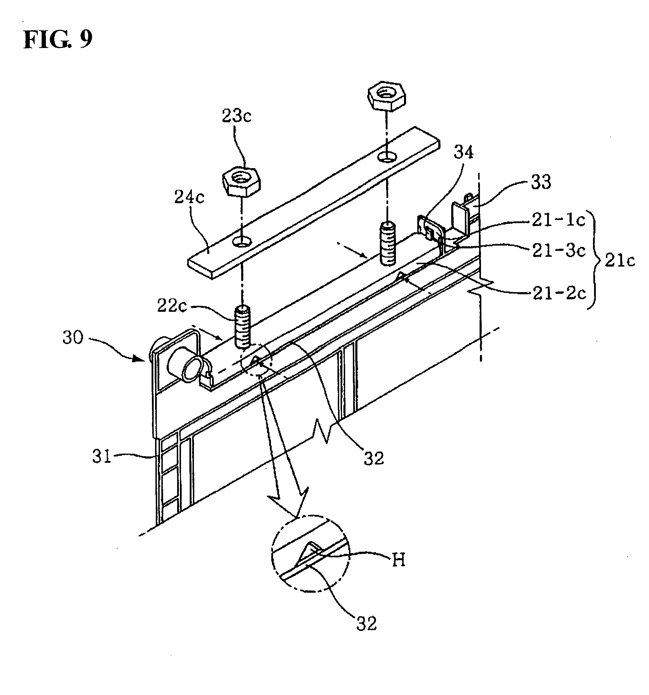

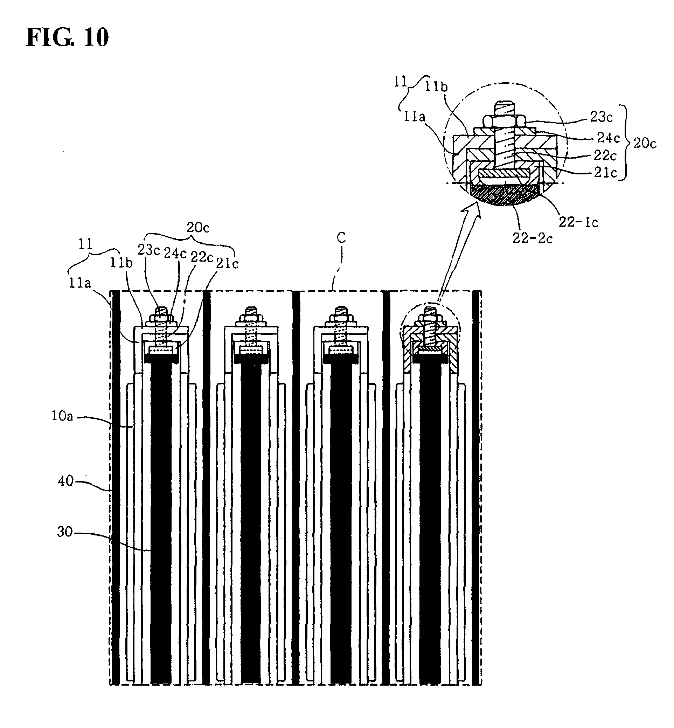

FIG. 6 is a perspective view explaining a connective structure between cell batteries constituting a module pack for a secondary battery using third tab fastening members according to an embodiment of the present invention. FIGS. 7 and 8 are detailed views of the bolt of FIG. 6. FIG. 9 is a perspective view explaining connection between a third tab fastening member and an isolating partition in the module pack for a secondary battery illustrated in FIG. 6. FIG. 10 is a schematic side view explaining an internal construction of the module pack for a secondary battery illustrated in FIG. 6. Here, the description repeated with that of the previous embodiments will be omitted.

This embodiment is characterized in that the cell batteries 10 are connected in parallel or in series using third tab fastening members, each of which includes a tab support 21c, a bolt 22c, a nut 23c and a tab fixture 24c.

Here, the tab support 21c is provided with at least one first threaded hole, through which a body of the bolt 22c inserted from bottom to top passes, upwardly bent segments 21-1c vertically protruding upwardly from opposite ends thereof, and downwardly bent segments 21-2c vertically protruding downwards from opposite lateral edges thereof

At this time, as described below, each upwardly bent segment 21-1c is preferably provided with a fastening hole 21-3c to which a fastening protrusion 34 formed on the partition 30 is clamped. Since the fastening protrusion 34 is clamped to the fastening hole 21-3c, the tab support 21c is stably fixed to the partition 30, and is not separated by vibration or impact from the outside, thereby improving reliability.

Further, the downwardly bent segments 21-2c are preferably bent inwards so as to support a bolt head 22-1c in an upward direction, so that the bolt 22c does not rotate to come out in a downward direction after the bolt 22c is inserted upwards. In detail, the downwardly bent segments 21-2c facing the bolt 22c are bent inwards to form "V" grooves (V-shaped grooving), and thus support the bolt head 22-1c, thereby fixing the bolt 22c so as not to come out in a downward direction. In FIG. 9, the structure of a caulking part H in which the V groove is formed to support the bolt head 22-1c is shown. Although the downwardly bent segments 21-2c facing the bolt 22c are bent inwards in part, the downwardly bent segments 21-2c facing the bolt 22c may be bent inwards in whole. This construction also falls into the scope of the present invention.

The bolt 22c is fastened with the nut 23c so as to connect the cell batteries 10. As illustrated in FIGS. 7 and 8, in order to prevent the bolt from rotating after the bolt is supported by the tab support 21c, the bolt head 22-1c has a polygonal shape, and preferably a rectangular shape.

Here, the bolt head 22-1c is preferably provided with caulking grooves 22-2c such that the inwardly bent parts of the downwardly bent segments 21-2c are held (e.g. by the V-shaped grooving), thereby supporting the bolt 22c and preventing the rotation of the bolt 22c. The caulking grooves 22-2c are formed by grooves going across the inside, preferably the middle, of the bolt head 22-1c as illustrated in FIG. 7, or by grooving opposite edges of the bolt head 22-1c in a V shape or in a triangular shape as illustrated in FIG. 8. The shape of each caulking groove 22-2c is not limited to this construction. Thus, any shape for holding the downwardly bent segments 21-2c to support the bolt 22c will do for the shape of each caulking groove 22-2c.

The tab fixture 24c is provided with a second threaded hole at a position corresponding to the body of the bolt 22c such that the body of the bolt 22c passes through the second threaded hole.

According to the third embodiment, the body of the bolt 22c, which fixedly protrudes through the first threaded hole of the tab support 21c, enters toward the fastening recess 13 of the battery tab 11 of the first cell battery in a lateral direction, i.e. in a horizontal direction, and then the fastening recess 13 of battery tab of the second cell battery 10 is brought to the body of the bolt 22c until it overlaps with the fastening recess 13 of the battery tab of the first cell battery 10. Then, the protruding body of the bolt 22c passes the second threaded hole of the tab fixture 24c, and is fastened with the nut 23c. Thereby, the battery tabs of the first and second cell batteries 10 are connected with each other.

Here, referring to FIG. 8, in the embodiment of the present invention, after the tab support 21c is disposed above the tab coupler 32 of the partition 30, the fastening protrusions 34 formed on an upper side of the tab coupler 32 are clamped to the fastening holes 21-3c formed in the upwardly bent segments 21-1c. Thereby, the tab support 21c is fixedly installed on the partition 30.

In this manner, the tab support 21 c is fixed on an upper side of the partition 30, so that the cell batteries can be connected in a more stable manner and be fastened in an easier manner.

Meanwhile, referring to FIG. 10, the module pack 1 for a secondary battery according to an embodiment of the present invention is constructed so that the numerous cell batteries are vertically disposed in a case C serving as a body of the module pack 1 for a secondary battery. At this time, each pair of neighboring cell batteries 10 is connected in such a manner that the body of the bolt protruding upwardly from the tab support 21 c, which is clamped to the fastening protrusions formed on the partition 30 formed of insulating material, protrudes from bottom to top through the fastening recesses 13 of the horizontal plate parts 11b of the cell batteries and the second threaded hole of the tab fixture 24c after the battery tabs of the cell batteries overlap with each other, and is fastened with the nut 23c.

Here, the bolt 22c is fixedly supported on the tab support 21c by the downwardly bent segments 21-2c that are inserted into the caulking groove 22-2c and support the bolt head 21-1c. Although it is shown in FIG. 9 that the downwardly bent segments 21-2c support only the lateral edges of the caulking grooves 22-2c, the downwardly bent segments 21-2c can be additionally bent toward the inside of the caulking grooves 22-2c, and thus support the bolt head 22-1c in a more stable manner. This construction also falls within the scope of the present invention.

In the third embodiment, it does not matter if the tab support 21c is fixed to the partition 30 following connecting the battery tabs using the third fastening members 20c. However, in order to facilitate fastening work, the battery tabs are preferably connected after the tab supports 21c are fixed to the partition 30.

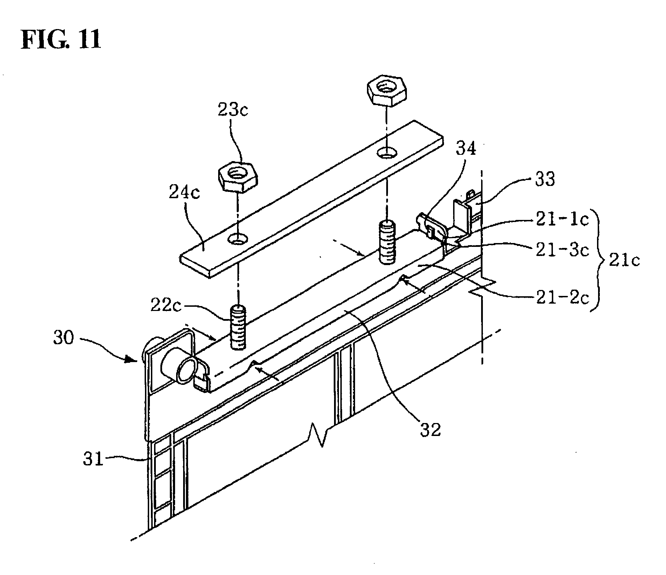

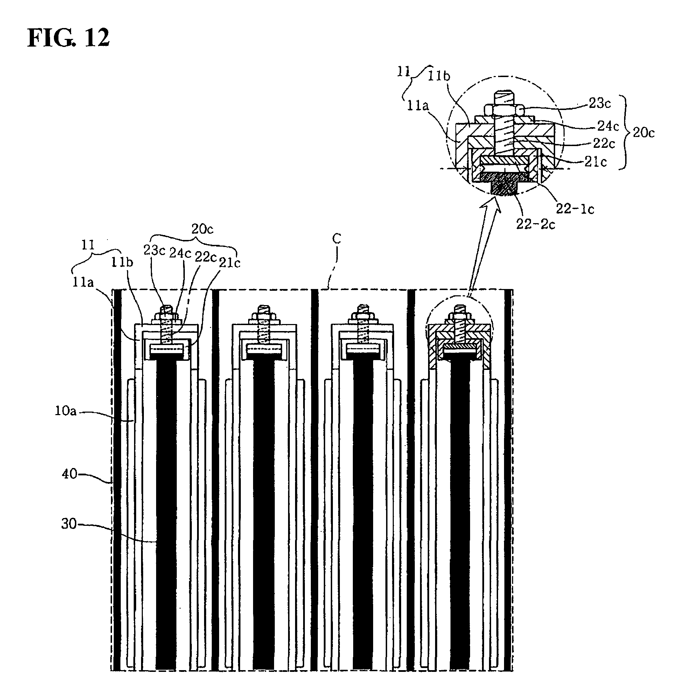

FIG. 11 is a perspective view explaining another connection between a third tab fastening member and a partition in the module pack for a secondary battery illustrated in FIG. 6. FIG. 12 is a schematic side view explaining an internal construction of the module pack for a secondary battery illustrated in FIG. 10. Here, in describing this embodiment, the description repetitive of the previous embodiment(s) will be omitted, and the same reference numerals or letters will be used to designate elements equal or equivalent to those of the previous embodiments.

Referring to FIG. 11, in this embodiment, after the downwardly bent segments 21-2c of the tab support 21c are disposed so as to enclose the partition 30, the fastening protrusions 34 formed on the upper side of the tab coupler 32 of the partition 30 are clamped to the fastening holes 21-3c formed in the upwardly bent segments 21-1c. Thereby, the tab support 21c is fixedly installed on the partition 30.

In other words, after the downwardly bent segments 21-2c are disposed so as to enclose the partition 30, the tab support 21 c is fixed to the partition 30. Thus, in comparison with that of FIG. 8, the tab support 21c is more stably fixed to the partition 30, and makes it possible to fasten and connect the cell batteries in a more solid and easier manner.

Meanwhile, referring to FIG. 12, the module pack 1 for a secondary battery according to an embodiment of the present invention is constructed so that the numerous cell batteries are vertically disposed in a case C serving as a body of the module pack 1 for a secondary battery, and so that the partition 30 formed of insulating material is interposed between each pair of neighboring cell batteries 10, the battery tabs of which overlap with each other. At this time, the downwardly bent segments 21-2c of the tab support 21c are disposed so as to enclose the sides of the partition 30, and the fastening holes 21-3c formed in the upwardly bent segments 21-1c are coupled with the fastening protrusions 34 formed on the partition 30. Thereby, the tab support 21c is fixedly installed on the partition 30. The body of the bolt protruding upwardly from the tab support 21c protrudes from bottom to top through the fastening recesses 13 of the horizontal plate parts 11b of the cell batteries and the threaded hole of the tab fixture 24c, and is fastened with the nut 23c. As a result, each pair of neighboring cell batteries 10 is connected with each other.

Here, it does not matter if the downwardly bent segments 21-2c are disposed so as to enclose the partition 30. However, for the purpose of firmer connection, the downwardly bent segments 21-2c are preferably bent in part toward the caulking groove 21-2c of the bolt 22c. Further, although it is shown in the figure that the bolt 22c having the caulking groove 21-2c is used, the bolt head 22-1c of the bolt 22c is disposed above the partition 30 in the case in which the downwardly bent segments 21-2c enclose the partition 30, so that the downwardly bent segments 21-2c can support the bolt 22c. As such, the downwardly bent segments 21-2c are not required to be inserted into the caulking grooves 22-2c and to support the bolt 22c, so that an ordinary bolt having no caulking groove can be used.

In this embodiment, it does not matter if the tab support 21 c is fixed to the partition 30 following connecting the battery tabs using the third fastening members 20c. However, in order to facilitate fastening work, the battery tabs are preferably connected after the tab supports 21c are fixed to the partition 30.

Although exemplary embodiments of the present invention have been described for illustrative purposes, those skilled in the art will appreciate that various modifications, additions and substitutions are possible, without departing from the scope of the invention as disclosed in the accompanying claims.

Thus, such modifications, additions and substitutions should be interpreted as falling within the scope of the claims of the present invention.

## Claims

1. A module pack (1) for a secondary battery comprising:
a plurality of cell batteries (10), each of which has a pouch (10a) holding and sealing a rechargeable electrode assembly and planar battery tabs for negative and positive electrodes for inducing electric current from the electrode assembly to an outside, which are connected in parallel or in series, and which are housed in a case (C);
each battery tab (11) including a vertical plate (11a) part that is connected to the electrode assembly at a first end thereof and vertically extends at a second end thereof, a horizontal plate (11b) part that is bent at and horizontally extends from the second end of the vertical plate part at a right angle, and at least one fastening recess (13) that is integrally formed in a leading end of the horizontal plate part and allows a fastening member (20c) to enter in a lateral direction, and
a partition (30), **characterized in that** the fastening member includes a tab support (21c) having a first threaded hole; a tab fixture (24c) having a second threaded hole at a position corresponding to the first threaded hole of the tab support; a bolt (22c) inserted upwardly into and fixed in the first threaded hole of the tab support; and a nut (23c),
the partition (30) is interposed between a pair of neighboring cell batteries, formed of insulating material, and having a plurality of fastening protrusions (34) protruding in a vertical upward direction,
the tab support (21c) includes upwardly bent segments (21-1c) vertically protruding upwardly from opposite ends thereof, and downwardly bent segments (21-2c) vertically protruding downwardly from opposite lateral edges thereof, and
the upwardly bent segments (21-1c) include fastening holes (21-3c), and the fastening protrusions (34) of the partition (30) are coupled with the fastening holes such that the tab support is fixed to the partition.

2. The module pack as set forth in claim 1, wherein the bolt (22c) sequentially passes through the fastening recess of the horizontal plate part disposed between the tab support (21c) and the tab fixture and the threaded hole of the tab fixture, and is fastened with the nut (23c).

3. The module pack as set forth in claim 1, wherein the downwardly bent segments (21-2c) are bent inwards in order to fixedly support the bolt inserted upwardly.

4. The module pack as set forth in claim 1, wherein the downwardly bent segments (21-2c) neighboring the bolt in order to fixedly support the bolt inserted upwardly are bent to form V grooves.

5. The module pack as set forth in claim 3 or 4, wherein the bolt includes a polygonal head having at least one caulking groove for holding the downwardly bent segments (21-2c) bent inwards.

## Patentansprüche

1. Modulpack (1) für eine Sekundärbatterie, das Folgendes umfasst:
mehrere Zellenbatterien (10), wovon jede eine Tasche (10a), die eine wiederaufladbare Elektrodenanordnung hält und einschließt, und ebene Batterielaschen für negative und positive Elektroden, um den elektrischen Strom von der Elektrodenanordnung nach außen zu führen, die parallel oder seriell geschaltet sind und in einem Gehäuse (C) untergebracht sind, besitzt;
wobei jede Batterielasche (11) einen vertikalen Plattenabschnitt (11a), der an einem ersten Ende mit der Elektrodenanordnung verbunden ist und sich an einem zweiten Ende vertikal erstreckt, einen horizontalen Plattenabschnitt (11b), der an dem zweiten Ende des vertikalen Plattenabschnitts unter einem rechten Winkel gebogen ist und sich hiervon horizontal erstreckt, und wenigstens eine Befestigungsaussparung (13), die einteilig in einem vorderen Ende des horizontalen Plattenabschnitts ausgebildet ist und ermöglicht, dass ein Befestigungselement (20c) in einer seitlichen Richtung eintritt, enthält, und
eine Trennwand (30), **dadurch gekennzeichnet, dass** das Befestigungselement einen Laschenträger (21c), der ein erstes Gewindeloch besitzt; eine Laschenbefestigung (24c), die ein zweites Gewindeloch an einer dem ersten Gewindeloch des Laschenträgers entsprechenden Position besitzt; einen Bolzen (22c), der nach oben in das erste Gewindeloch des Laschenträgers eingesetzt und darin befestigt ist; und eine Mutter (23c) enthält,
wobei die Trennwand (30) zwischen ein Paar benachbarter Zellenbatterien eingefügt ist und aus Isoliermaterial gebildet ist und mehrere Befestigungsvorsprünge (34) besitzt, die in einer vertikalen Aufwärtsrichtung vorstehen,
der Laschenträger (21c) nach oben gebogene Segmente (21-1c), die sich von gegenüberliegenden Enden hiervon vertikal nach oben erstrecken, und nach unten gebogene Segmente (21-2c), die sich von gegenüberliegenden Seitenkanten hiervon vertikal nach unten erstrecken, enthält, und
die nach oben gebogenen Segmente (21-1c) Befestigungslöcher (21-3c) enthalten und die Befestigungsvorsprünge (34) der Trennwand (30) mit den Befestigungslöchern in der Weise gekoppelt sind, dass der Laschenträger an der Trennwand befestigt ist.

2. Modulpack nach Anspruch 1, wobei der Bolzen (22c) nacheinander durch die Befestigungsaussparung des horizontalen Plattenabschnitts, der zwischen dem Laschenträger (21c) und der Laschenbefestigung angeordnet ist, und durch das Gewindeloch der Laschenbefestigung verläuft und an der Mutter (23c) befestigt ist.

3. Modulpack nach Anspruch 1, wobei die nach unten gebogenen Segmente (21-2c) einwärts gebogen sind, um den in Aufwärtsrichtung eingesetzten Bolzen festzuhalten.

4. Modulpack nach Anspruch 1, wobei die nach unten gebogenen Segmente (21-2c), die zu dem Bolzen benachbart sind, um den in Aufwärtsrichtung eingesetzten Bolzen fest zu tragen, gebogen sind, um V-Nuten zu bilden.

5. Modulpack nach Anspruch 3 oder 4, wobei der Bolzen einen polygonförmigen Kopf enthält, der wenigstens eine Verstemmnut besitzt, um die nach unten gebogenen Segmente (21-2c), die nach innen gebogen sind, zu halten.

## Revendications

1. Pack (1) de module pour batterie rechargeable comportant :
une pluralité de éléments (10) de batterie, dont chacun est doté d'un étui (10a) contenant et isolant un ensemble rechargeable d'électrodes et des languettes planes de batterie pour des électrodes négatives et positives servant à induire un courant électrique de l'ensemble d'électrodes vers l'extérieur, qui sont reliés en parallèle ou en série et qui sont logés dans un coffret (C) ;
chaque languette (11) de batterie comprenant une partie de plaque verticale (11a) qui est reliée à l'ensemble d'électrodes à une première extrémité de celle-ci et s'étend verticalement à une deuxième extrémité de celle-ci, une partie de plaque horizontale (11b) qui est coudée au niveau, et s'étend horizontalement à partir, de la deuxième extrémité de la partie de plaque verticale à angle droit, et au moins un évidement (13) de fixation qui est formé d'un seul tenant dans une extrémité avant de la partie de plaque horizontale et permet à un organe (20c) de fixation d'entrer dans une direction latérale, et
une cloison (30), **caractérisée en ce que** l'organe de fixation comprend une portée (21c) de languette dotée d'un premier trou taraudé ; une monture (24c) de languette dotée d'un deuxième trou taraudé dans une position correspondant au premier trou taraudé de la portée de languette ; un boulon (22c) inséré vers le haut et fixé dans le premier trou taraudé de la portée de languette ; et un écrou (23c),
**en ce que** la cloison (30) est interposée entre une paire d'éléments de batterie voisins, formée de matériau isolant, et dotée d'une pluralité de protubérances (34) de fixation dépassant dans une direction verticale ascendante, **en ce que** la portée de languette (21c) comprend des segments (21-1c) coudés vers le haut dépassant verticalement vers le haut à partir d'extrémités opposées de celle-ci, et des segments (21-2c) coudés vers le bas verticalement dépassant vers le bas à partir de bords latéraux opposés de celle-ci, et
**en ce que** les segments (21-1c) coudés vers le haut comprennent des trous (21-3c) de fixation, et **en ce que** les protubérances (34) de fixation de la cloison (30) sont couplées aux trous de fixation de telle sorte que la portée de languette soit fixée à la cloison.

2. Pack de module selon la revendication 1, le boulon (22c) passant séquentiellement à travers l'évidement de fixation de la partie de plaque horizontale disposée entre la portée (21c) de languette et la monture de languette et le trou taraudé de la monture de languette, et étant immobilisé avec l'écrou (23c).

3. Pack de module selon la revendication 1, les segments (21-2c) coudés vers le bas étant coudés vers l'intérieur afin de soutenir de manière fixe le boulon inséré vers le haut.

4. Pack de module selon la revendication 1, les segments (21-2c) coudés vers le bas qui sont voisins du boulon afin de soutenir de manière fixe le boulon inséré vers le haut étant coudés pour former des rainures en V.

5. Pack de module selon la revendication 3 ou 4, le boulon comprenant une tête polygonale dotée d'au moins une rainure de matage pour maintenir les segments (21-2c) coudés vers le bas coudés vers l'intérieur.
